# EUROPEAN PATENT SPECIFICATION

(11) **EP 0 378 399 B1**
(45) Date of publication and mention of the grant of the patent: **23.07.1997**
(21) Application number: 90300293.9
(22) Date of filing: 10.01.1990
(51) Int. Cl.: G06F 12/08

(54) **Cache content control in multi-processor networks**
Cache-Speicherinhaltssteuerung in Mehrprozessornetzwerken
Commande du contenu d'antémémoire dans des réseaux multiprocesseurs

(30) Priority: 13.01.1989 JP 4799/89
(43) Date of publication of application: 18.07.1990
(73) Proprietor: International Business Machines Corporation, Armonk, N.Y. 10504 (US)
(72) Inventor: Moriwaki, Atsushi Mochidahaitsu 107 goh, Kawasaki-shi Kanagawa-ken (JP); Shimizu, Shigenori Parkhomes 106, Kawasaki-shi Kanagawa-ken (JP)
(74) Representative: Bailey, Geoffrey Alan

(56) References cited:
- COMPCON SPRING 88, San Francisco, 29th February - 4th March 1988, conf. 33, pages 505-511, IEEE, New York, US; P. SWEAZEY: "Shared memory systems on the futurebus"
- ELECTRONIC ENGINEERING, vol. 60, no. 739, July 1988, pages 31,33,34,36, Woolwich, London, GB; "Caching on futurebus"
- COMPCON SPRING 88, San Francisco, 29th February - 4th March 1988, conf. 33, pages 218-222, IEEE, New York, US; L.K. QUINONES; "The NS32605 cache controller"

## Description

The present invention relates to cache content control in multiprocessor networks wherein a plurality of processors are connected to a shared bus and a shared memory via respective private caches. The arrangement disclosed provides appreciable advantages in multiprocessor system having so-called snoop caches, wherein a controller is provided to each private cache to monitor signals on the shared bus and achieves data coherency between a plurality of caches at low overhead.

In a multiprocessor system of a shared memory and bus type, a private cache is conventionally provided to each processor to decrease conflicts of access to a bus and memory. With this sort of configuration, a mechanism is required for guaranteeing data consistency or coherency among the plurality of caches. One such mechanisms is known as the Snoop Cache technique.

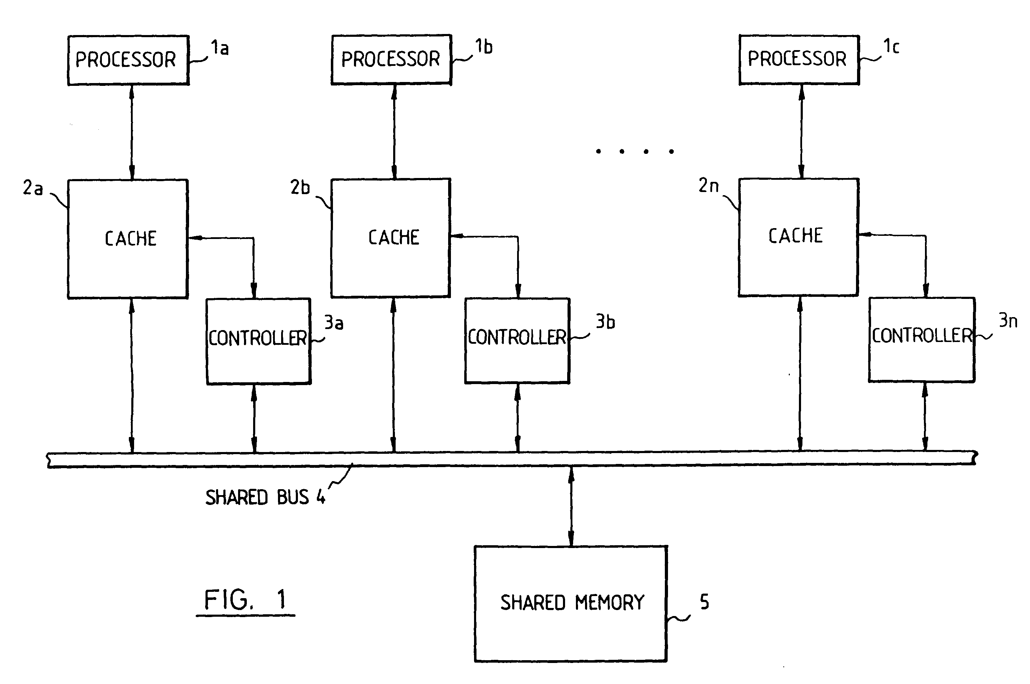

Fig.1 shows a multiprocessor system of the snoop cache type, wherein a plurality of processors 1a,.., 1n are connected to a shared bus 4 and a shared memory 5 via private caches 2a,..,2n respectively. Controllers 3a,..,3n are provided for respective private caches 2a,..,2n to monitor signals on the shared bus 4 and to achieve data coherency in the distributed data configuration. In other words, in the system of this type, the controllers 3a,..,3n operate following a protocol relative to the shared bus 4a to attain data coherency.

Conventional protocols are divided into the invalidate type and the update type with regard to a way in which, when any of the processors 1a,..,1n writes data in a corresponding private cache 2a,..,2n, data having the same address in the remaining caches 2a,..,2n is manipulated. In the invalidate type protocol, data having the same address in the remaining caches 2a,..,2n are all invalidated to maintain data coherency. On the other hand, in the update type protocol, all the copies of the same address are updated to the same value as the written data into any of processors 1a,..,1n. In either case, data coherency is maintained for all accessible data.

In greater detail, an operation for guaranteeing data coherency upon a write operation for each modification type is performed as follows. Each line of each private cache is provided with one extra information bit, referred to as a tag, which indicates that the line has a data "exclusively" or "shares" it with one or more other caches. Only if data of a line of a private cache is "shared" when a related processor writes in the line of the private cache, does a related controller take control of the shared bus to perform a procedure for guaranteeing data coherency, and submits request signals to all the other caches to request them to do required operations.

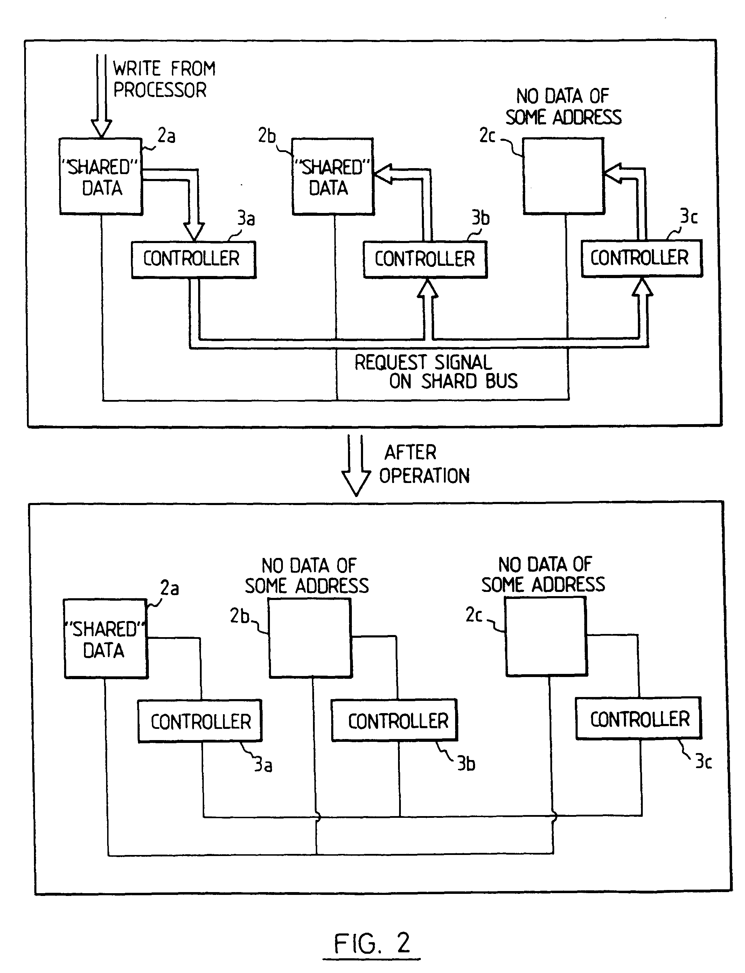

Fig.2 shows an operation of the invalidate type, wherein, as shown as one example thereof, certain shared data in the cache 2a is subjected to a write operation, cache 2b also storing the shared data, and cache 2c not so. The requesting controller 3a of cache 2a transmits a request signal onto the shared bus 4, and changes the tag of it's shared data to "exclusive". The controller 3b of the cache 2b which has the shared data recognises the request signal on the shared bus 4, and invalidates the shared data because it has the same address. In the other cache 2c no operation is performed because it doesn't have the shared data.

Such a system is described for example in Electronic Engineering, Vol 60, no 739, July 1988, pages 31-36.

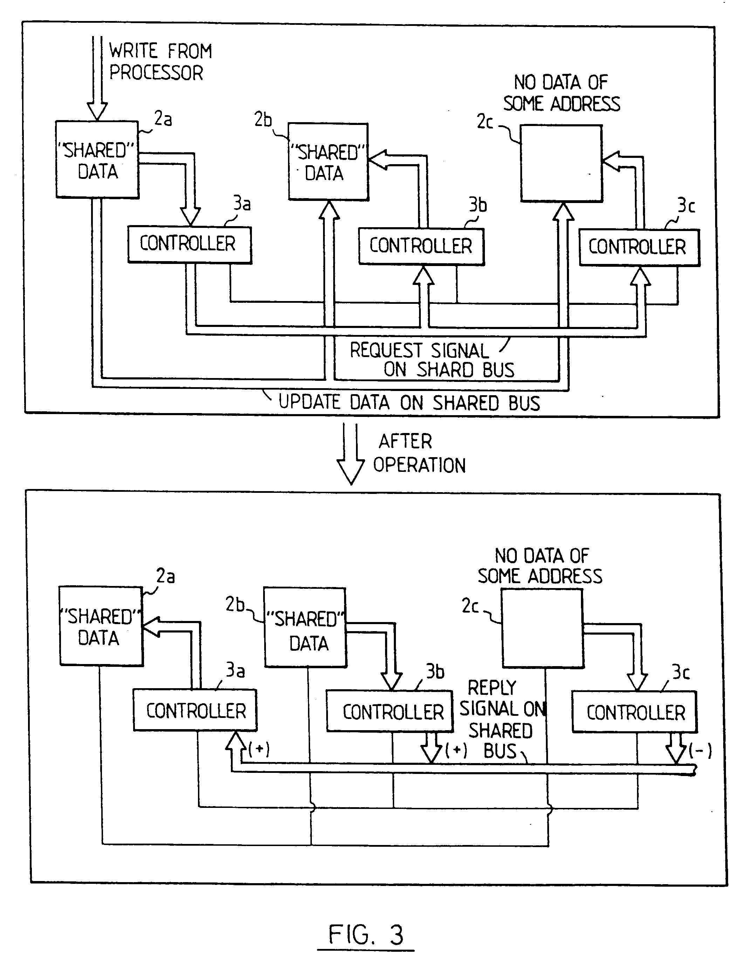

Fig. 3 shows an operation in the update type. Here is indicated also the case where the caches 2a and 2b have the shared data and the shared data in the cache 2a is subjected to a write operation. In this case, the requesting controller 3a of the cache 2a, after submitting a request signal and update data on the shared bus, waits for a reply signal, and determines its own tag based on that reply signal. The controller 3b of the cache 2b having the shared data recognises the request signal and updates the shared data and, because it has a data having the same address, it updates the data with the update data and respond with a positive reply signal. The reply signal is next wired ORed with other like replies and then returned to the requesting controller 3a of the cache 2a. Here the positive value represents that "the data is shared by at least one other caches", and the negative value means that "the data is in no way shared by any other cache". Accordingly, when a positive reply signal is returned then the requesting cache remains "shared", and otherwise it becomes "exclusive".

In general, the update type is superior to the invalidate type because the former provides a higher data hit rate. In the update type, however, bus contention occurs more frequently because it is much more possible that an accessed data is shared and then because bus access occurs more frequently during a data write operation. Consequently, which modification protocol type is more suitable can not be determined on a general basis, and depends on characteristics of a program to be run and operational circumstances of particular processor. It is accordingly required to switch among protocol types based on circumstances.

In order to achieve such a system to be able to switch protocols, it may be proposed that a controller is equipped to perform both of the invalidate type and update type protocols, and is prepared to switch the modification type based on the situations. The equivalent effect may be obtained by arbitrary field replacement of processors. With this proposal, there are two problems that arise. First, since conventional protocol types are designed for a complete system, if a modification type for each cache is switched, protocols are different from one cache to another and data coherency cannot be achieved conventionally. For example, when a shared data of a certain cache is subjected to a write operation, and the cache is of the invalidate type, and further another cache having the same shared data is of the update type, then the another cache has the shared data updated, while the cache subjected to the write operation has the data marked as exclusive (in the invalidate type any shared data subjected to a write operation is changed to exclusive). Accordingly, when the data in the cache of the invalidate type is, after that, subjected to a write operation, the write operation doesn't reflect on the data in the another cache, and then data coherency between the two caches is lost. Secondly, only if all the modification types over the system are switched simultaneously, data coherency can be maintained. However for this purpose, all the caches shall be switched simultaneously, and then synchronisation is required over the system, and during the synchronisation any memory access is prohibited. Accordingly dynamic switching cannot be practically performed at run time.

The present invention provides a cache control system as claimed in claim 1.

From a further aspect, the present invention provides a multiprocessor system comprising a plurality of processors connected to a shared bus and a shared memory via respective private caches, each private cache having such a cache control system.

Such arrangements are thought to provide a multiprocessor system wherein a modification type can be changed for each cache according to situations - dynamically changed for each cache on run time or by arbitrary unit replacement.

As disclosed hereinafter, a function for dynamically changing a modification type for each cache is implemented by controllers and protocols. For that purpose a concept of modification mode is introduced as an attribute for indication of a modification type of each cache, and a protocol is defined which does not destroy a data coherency for any combination of modification types, and then controllers are provided which operate under that protocol and enable dynamically to change modification types.

By the above function, a multiprocessor system can select at any time for each private cache a suitable modification type, and further change modification types for each cache at any time based on situations changing.

The prior art already referred to by way of illustration and one embodiment of the present invention are illustrated in the drawings by way of explanation and example. In the drawings;
Fig.1 is a block diagram for illustrating a conventional configuration of a multiprocessor system of the shared bus and memory and snoop cache;
Figs.2 and 3 illustrate protocols of the invalidate type and the update type respectively;
Fig.4 is a block diagram of one embodiment of the present invention; and
Fig.5 illustrates one protocol enabling the mixture, of two modification types, that can be provided by the present invention.

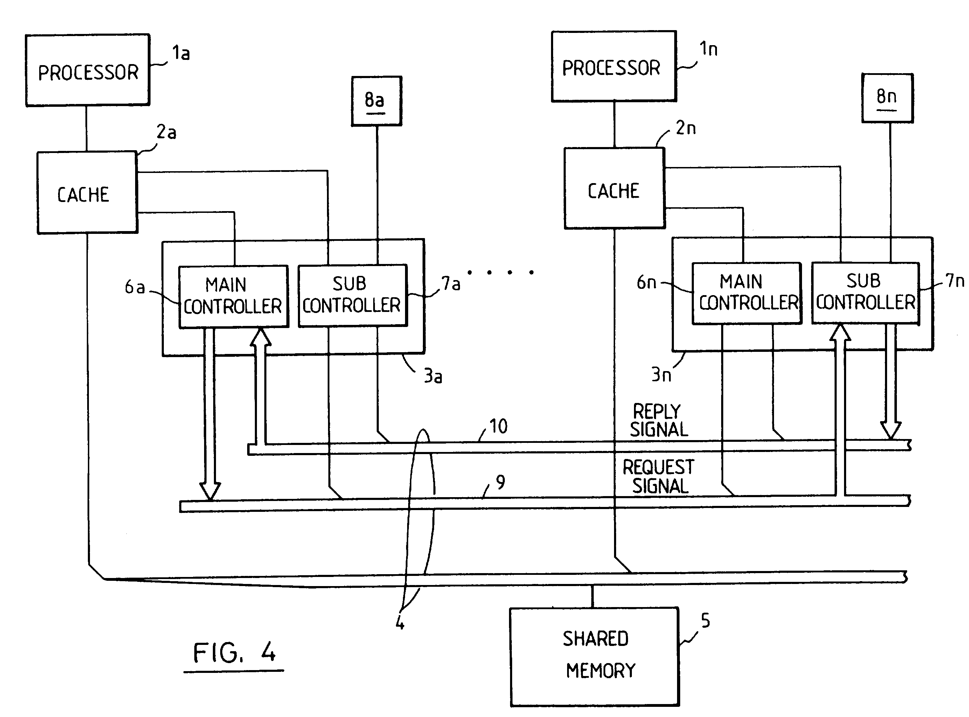

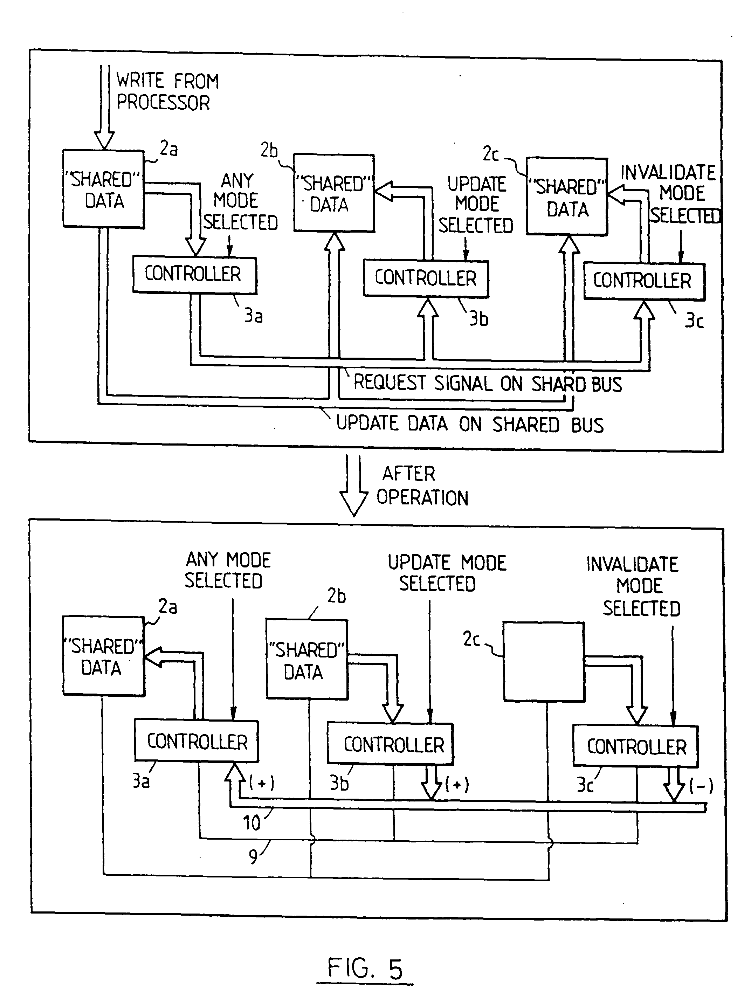

One embodiment of the present invention is described below in reference with Figs 4 and 5. It is noted here that the overall configuration of the embodiment is almost the same as the prior configuration, so that only the significant features mainly consisting of controllers are described.

Referring to Fig.4, the controllers 3a,..,3n consist of main controllers 6a,..,6n and sub-controllers 7a,..,7n respectively. The operation of each sub controller 7a,..,7n is determined by a value of one bit in each modification mode register 8a,..,8n provided separately from each controller 3a,..,3n. Positive and negative values of the registers 8a,..,8n correspond to the invalidate and update types respectively. In this configuration, the main controllers 6a,..,6n are connected in common to a request signal bus 9 of a shared bus, and the sub-controllers 7a,..,7n are connected to a reply signal bus 10 of the shared bus. When a main controller of one controller places a request signal on the request signal bus 9, the sub-controllers of the other controllers each receive the request signal, and place reply signals on the reply signal bus 10. These reply signals are then wired ORed and return to the main controller of the controller which placed the request signal. It should be noted that a bus arbiter (not shown) is provided so that it arbitrates the occupation of the request signal bus 9 and only one main controller at a time can place a request signal thereon. Because of the above configuration, it becomes possible to adopt a protocol definition which has not been proposed before and in which a modification type can be selected for each controller receiving the request signal.

Contents of modification mode registers 8a,..,8n are for example set by processors 1a,..,1n during initialisation, and they can be set again during usual operation, i.e., at run time.

In this embodiment, the protocol is defined as shown in Fig.5. In Fig.5 for example, caches 2a, 2b and 2c have a certain shared data, and the cache 2b is of the update mode, and the cache 2c is of the invalidate mode. The cache 2a may be of either type.

Referring to Fig.5, when the processor 1a ( not shown) writes into "shared" data in its private cache 2a, the controller of the cache 2a places a request signal and an update data on the shared bus 4, and then has to wait for a reply signal, thereafter to determine the tag based on the reply signal. The controllers 3b and 3c of the other caches 2b and 2c recognise the request signal and the update data on the shared bus 4, and then operate as defined by the modification mode registers 8b and 8c respectively. In connection with cache 2c, the modification mode register indicates positive, and then the controller returns a negative value as a reply signal. Further if the cache 2c itself has a data of the same address, then it invalidates the data. In the example shown in this figure, the cache 2c has a data at the same address, it invalidates the data. That is, it operates like the invalidate type, and at this time it is in the invalidate mode. On the other hand, in connection with the cache 2b, the modification mode register 8b has a negative value, and in this case if the cache has a data of the same address, the controller 3b updates the data with the update data, and return a positive value as a reply signal, or otherwise the controller 3b performs no operation other than returning a negative value as a reply signal. According to the example shown in the figure, the cache 2b has a data at the same address, so the controller 3b updates the data and return a positive reply signal. That means it operates as if it was in the update type, and at this time it operates in the update mode. Hereinafter the above two modes are referred to as modification modes. The reply signals are wired ORed on the shared bus 4 and then are returned to the controller 3a of the cache 2a, which placed the request signal. Accordingly, a positive value thus wired ORed means " at least one other cache has the shared data after that", and a negative value indicates " no other cache has the shared data after that". Therefore the cache 2a placing the request signal sets the data of the address to "shared" when it receives a positive reply signal, and it sets the data to "exclusive" when it receives a negative reply signal.

According to the above protocol definition, the operation of the cache requesting the request signal doesn't depend on its modification mode, and further it doesn't directly depend on the modification modes of the other caches, but it determines how to operate currently by recognising the states of the other caches through only the reply signal. In other words, it can determine whether the data is shared or exclusive by the most primitive and direct information. On the other hand, each cache receiving a request signal determines how to operate according to its modification mode, and isn't affected by the modification modes of the other caches directly or indirectly. That is, each cache takes an individual protocol independently. In the above manner, the implementation shown in Fig.4, wherein operations for placing and receiving a request signal are supplied by the main controller and sub-controller respectively, and the value of the modification mode register reflects on only the sub-controller, supports the protocol of Fig.5 without any conflict.

According to the above configuration and protocol definition, modification modes newly introduced here are different from the conventional modification types, and they are not attributes for the total system but attributes for each cache. That is, a modification type of each cache doesn't affect an operation any other cache, so that any modification mode can be selected for each cache, and so that they can operate in individual modes simultaneously without affecting data coherency. Further in this embodiment, it is guaranteed by controlling write operations to modification mode registers and operations of sub controllers exclusively by hardware, that update of a modification mode in each cache doesn't destroy data coherency. Accordingly a modification mode of each cache can be dynamically performed without necessity of synchronisation over the complete system.

In the above description, only consistency among caches has been referred to. However consistency between caches and the shared memory is also maintained. In the particular example, when exclusive data is subjected to a write operation, it is migrated to shared memory upon replacement related to that exclusive data after that the shared data is written in (swapped). On the other hand, when a shared data is subjected to a write operation, the shared memory is written in at the same time(store through). Since swap and store through themselves are well known in the art, detailed description about them is omitted.

However in the above embodiment as information used to change between the invalidate and update modes, contents in modification registers of controllers are used, different alternatives are possible for that information. For example, a method is possible wherein a requesting cache places on the shared bus, control signals for defining modification modes of other caches, and replying caches operate according to the control signals. In another example, replying caches may determine how to operate according to accessed address or address range. It should be noted that the present invention doesn't deal with how to implement modification modes into controllers, but how to enable mixture of modification modes by using modification mode information defined in any way and how to enable to change modification modes dynamically.

As described in the above, the modification mode of each cache in a multiprocessor system of the shared memory and bus further using the snoop cache configuration can be selected independently, and can be dynamically switched. As a consequence, the most suitable write access method can be taken for situations, and the write access method can be switched upon the situation changing.

## Claims

1. A cache control system (3a,3n) for use with a private cache (2a,2n) to perform a data consistency maintenance procedure in a multiprocessor system of the type in which a plurality of processors (1a,1n) are connected to a shared bus (4) and a shared memory (5) via respective private caches (2a,2n) each having similar such control systems (3a,3n), the control system comprising:
means for marking data in the private cache as shared or exclusive;
means for marking data in the private cache as invalid or not invalid;
means arranged, if data in the private cache to be written to by the respective processor is marked as shared, to transmit over the shared bus (4) a request signal (9) including the address of the data to be written to and to wait for a response (10) from other private caches within the multiprocessor system;
means, responsive to receipt of such a request signal (9) over the shared bus (4), to determine whether a copy of the data to be written to by another private cache is present in the private cache and, if so, to invalidate the copy of the data;
characterised by:
means for indicating whether a copy of shared data in the private cache is to be invalidated or updated if modified in another private cache within the multiprocessor system;
and in that the cache control system is arranged in response to receipt of said such a request signal over the shared bus and if a copy of the data to be written to by another private cache is present in the private cache,
(i) to transmit a reply signal over the shared bus, indicating whether or not the copy of the data in the private cache is to be updated, and
(ii) if the copy of the data is to be updated, to update, and not invalidate, the copy of the data, and by
means, responsive to receipt of a response over the shared bus indicating that no copies of the data in any of the other private caches within the multiprocessor system are to be updated, to mark the data as exclusive in the private cache,
whereby the data consistency maintenance procedure for the private cache may be dynamically changed by switching the indication of whether a copy of the shared data in the private cache is to be invalidated or updated if modified in another private cache within the multiprocessor system.

2. A cache control system as claimed in claim 1 comprising a register (8a, 8n) for storing an indication whether a copy of shared data in the private cache is to be invalidated or updated if modified in another private cache.

3. A cache control system as claimed in claim 1 comprising means adapted to supply to another similar cache control system within the multiprocessor system, data indicating whether a copy of shared data in the private cache is to be invalidated or updated if modified in that private cache.

4. A cache control system as claimed in any preceding claim comprising means adapted to broadcast updated data along with the request signal.

5. A multiprocessor system comprising a plurality of processors (1a,1n) connected to a shared bus (4) and a shared memory (5) via respective private caches (2a,2n), each private cache having a cache control system as claimed in any preceding claim.

6. A method for controlling a private cache (2a,2n) to perform a data consistency maintenance procedure in a multiprocessor system of the type in which a plurality of processors (1a,1n) are connected to a shared bus (4) and a shared memory (5) via respective private caches (2a,2n) each employing similar such control methods, the method comprising:
marking data in the private cache as shared or exclusive;
marking data in the private cache as invalid or not invalid;
if data in the private cache to be written to by the respective processor is marked as shared, transmitting over the shared bus (4) a request signal (9) including the address of the data to be written to and waiting for a response (10) from other private caches within the multiprocessor system;
responsive to receipt of such a request signal (9) over the shared bus (4), determining whether a copy of the data to be written to by another private cache is present in the private cache and, if so, invalidating the copy of the data;
characterised by:
providing an indication of whether a copy of shared data in the private cache is to be invalidated or updated if modified in another private cache within the multiprocessor system; and
in response to receipt of said such a request signal over the shared bus and if a copy of the data to be written to by another private cache is present in the private cache,
(i) transmitting a reply signal over the shared bus, indicating whether or not the copy of the data in the private cache is to be updated, and
(ii) if the copy of the data is to be updated, updating, and not invalidating, the copy of the data, and
responsive to receipt of a response over the shared bus indicating that no copies of the data in any of the other private caches within the multiprocessor system are to be updated, marking the data as exclusive in the private cache,
wherein the data consistency maintenance procedure for the private cache may be dynamically changed by switching the indication of whether a copy of the shared data in the private cache is to be invalidated or updated if modified in another private cache within the multiprocessor system.

## Patentansprüche

1. Ein Cache-Steuersystem (3a, 3n) zur Verwendung für einen privaten Cache (2a, 2n), um ein Datenkonsistenz-Wartungsverfahren in einem Multiprozessorsystem durchzuführen, in dem zahlreiche Prozessoren (1a, 1n) mit einem gemeinsam benutzten Bus (4) und einem gemeinsam benutzten Speicher (5) verbunden sind und zwar über entsprechende private Caches (2a, 2n) mit ähnlichen Steuersystemen (3a, 3n), wobei das Steuersystem folgendes umfaßt:
Mittel zum Kennzeichnen der Daten im privaten Cache als gemeinsam benutzte oder exklusive Daten;
Mittel zum Kennzeichnen der Daten im privaten Cache als gültige oder nicht gültige Daten;
angeordnete Mittel, um im Falle von Daten im privaten Cache, in die der entsprechende Prozessor schreibt und die als gemeinsam benutzte Daten gekennzeichnet sind, ein Anforderungssignal (9) über den gemeinsam benutzten Bus (4) mit der Adresse der Daten, in die geschrieben werden soll, zu übermitteln und auf eine Antwort (10) von anderen privaten Caches im Multiprozessorsystem zu warten;
Mittel, die auf den Empfang des über den gemeinsam benutzten Bus übermittelten Anforderungssignals (9) reagieren, um festzustellen, ob eine Kopie der Daten, in die ein anderer privater Cache schreibt, im privaten Cache vorhanden ist, und wenn dies der Fall ist, um die Kopie der Daten ungültig zu machen;
wobei das System durch folgendes gekennzeichnet ist:
Mittel zur Anzeige, ob eine Kopie der gemeinsam benutzten Daten im privaten Cache ungültig gemacht oder aktualisiert werden soll, wenn die Daten in einem anderen privaten Cache im Multiprozessorsystem geändert wurden;
und das Cache-Steuersystem als Reaktion auf den Empfang des über den gemeinsamen Bus übermittelten Anforderungssignals und im Falle, daß eine Kopie der Daten, in die ein anderer privater Cache schreibt, im privaten Cache vorhanden ist,
(i) ein Antwortsignal über den gemeinsam benutzten Bus übermittelt, das anzeigt, ob die Kopie der Daten im privaten Cache aktualisiert werden soll oder nicht, und
(ii) wenn die Kopie der Daten aktualisiert werden soll, die Kopie der Daten aktualisiert und nicht ungültig macht, und
Mittel, die auf den Empfang einer Antwort über den gemeinsam benutzten Bus reagieren, die anzeigt, daß keine Kopien der Daten in einem der anderen privaten Caches im Multiprozessorsystem aktualisiert werden sollen, um die Daten als exklusiv im privaten Cache zu kennzeichnen,
wobei das Datenkonsistenz-Wartungsverfahren für den privaten Cache dynamisch geändert werden kann, indem die Anzeige, ob eine Kopie der gemeinsam benutzten Daten im privaten Cache ungültig gemacht oder aktualisiert werden soll, umgeschaltet wird, wenn die Daten in einem anderen privaten Cache im Multiprozessorsystem geändert wurden.

2. Ein Cache-Steuersystem nach Anspruch 1 mit einem Register (8a, 8n) zum Speichern einer Anzeige, ob die Kopie der gemeinsam benutzten Daten im privaten Cache ungültig gemacht oder aktualisiert werden soll, wenn die Daten in einem anderen privaten Cache geändert wurden.

3. Ein Cache-Steuersystem nach Anspruch 1 mit Mitteln, die angepaßt sind, um einem anderen Cache-Steuersystem im Multiprozessorsystem Daten bereitzustellen, die anzeigen, ob eine Kopie der gemeinsam benutzten Daten im privaten Cache ungültig gemacht oder aktualisiert werden soll, wenn die Daten in diesem privaten Cache geändert wurden.

4. Ein Cache-Steuersystem nach einem der oben genannten Ansprüche mit Mitteln, die angepaßt sind, um aktualisierte Daten zusammen mit dem Anforderungssignal zu übermitteln.

5. Ein Multiprozessorsystem mit zahlreichen Prozessoren (1a, 1n), die mit einem gemeinsam benutzten Bus (4) und einem gemeinsam benutzten Speicher (5) über entsprechende private Caches (2a, 2n) verbunden sind, wobei jeder private Cache über ein Cache-Steuersystem nach einem der oben genannten Ansprüche verfügt.

6. Ein Verfahren zur Steuerung eines privaten Cache (2a, 2n), um ein Datenkonsistenz-Wartungsverfahren in einem Multiprozessorsystem durchzuführen, in dem zahlreiche Prozessoren (1a, 1n) mit einem gemeinsam benutzten Bus (4) und einem gemeinsam benutzten Speicher (5) verbunden sind und zwar über entsprechende private Caches (2a, 2n), die ähnliche Steuerverfahren anwenden, wobei das Verfahren folgendes umfaßt:
die Kennzeichnung der Daten im privaten Cache als gemeinsam benutzte oder exklusive Daten;
die Kennzeichnung der Daten im privaten Cache als gültige oder nicht gültige Daten;
im Falle von Daten im privaten Cache, in die der entsprechende Prozessor schreibt und die als gemeinsam benutzte Daten gekennzeichnet sind, die Übermittlung eines Anforderungssignals (9) über den gemeinsam benutzten Bus (4) mit der Adresse der Daten, in die geschrieben werden soll, und das Warten auf eine Antwort (10) von anderen privaten Caches im Multiprozessorsystem;
als Reaktion auf den Empfang des über den gemeinsam benutzten Bus übermittelten Anforderungssignals (9) die Feststellung, ob eine Kopie der Daten, in die ein anderer privater Cache schreibt, im privaten Cache vorhanden ist, und wenn dies der Fall ist, die Ungültigmachung der Kopie der Daten;
wobei das Verfahren durch folgendes gekennzeichnet ist:
die Bereitstellung einer Anzeige, ob eine Kopie der gemeinsam benutzten Daten im privaten Cache ungültig gemacht oder aktualisiert werden soll, wenn die Daten in einem anderen privaten Cache im Multiprozessorsystem geändert wurden;
und als Reaktion auf den Empfang des über den gemeinsamen Bus übermittelten Anforderungssignals und im Falle, daß eine Kopie der Daten, in die ein anderer privater Cache schreibt, im privaten Cache vorhanden ist,
(i) die Übermittlung eines Antwortsignals über den gemeinsam benutzten Bus, das anzeigt, ob die Kopie der Daten im privaten Cache aktualisiert werden soll oder nicht, und
(ii) wenn die Kopie der Daten aktualisiert werden soll, die Aktualisierung und nicht Ungültigmachung der Kopie der Daten, und
als Reaktion auf den Empfang einer Antwort über den gemeinsam benutzten Bus, die anzeigt, daß keine Kopien der Daten in einem der anderen privaten Caches im Multiprozessorsystem aktualisiert werden sollen, die Kennzeichnung der Daten als exklusiv im privaten Cache,
wobei das Datenkonsistenz-Wartungsverfahren für den privaten Cache dynamisch geändert werden kann, indem die Anzeige, ob eine Kopie der gemeinsam benutzten Daten im privaten Cache ungültig gemacht oder aktualisiert werden soll, umgeschaltet wird, wenn die Daten in einem anderen privaten Cache im Multiprozessorsystem geändert wurden.

## Revendications

1. Système de commande d'antémémoire (3a, 3n) à utiliser avec une antémémoire individuelle (2a, 2n) pour exécuter une procédure d'entretien de la cohérence des données dans un système multiprocesseurs du type dans lequel une pluralité de processeurs (1a, 1n) sont connectés à un bus partagé (4) et à une mémoire partagée (5) par le biais d'antémémoires individuelles respectives (2a, 2n) ayant chacune des systèmes de commande identiques de cette sorte (3a, 3n), le système de commande comprenant:
un moyen pour apposer sur les données contenues dans l'antémémoire individuelle une marque indiquant qu'elles sont partagées ou alors exclusives;
un moyen pour apposer sur les données contenues dans l'antémémoire individuelle une marque indiquant qu'elles sont non valables ou alors valables;
un moyen conçu pour, si les données de l'antémémoire individuelle auxquelles le processeur respectif doit écrire sont indiquées comme étant partagées, transmettre sur le bus partagé (4) un signal de requête (9) incluant l'adresse des données auxquelles il faut écrire et d'attendre une réponse (10) des autres antémémoires individuelles comprises dans le système multiprocesseurs;
un moyen qui, en réponse à la réception d'un tel signal de requête (9) sur le bus partagé (4), détermine si une copie des données qui doivent être adressées par une autre antémémoire individuelle est présente dans l'antémémoire individuelle et, si c'est le cas, non valable la copie des données;
caractérisé par:
un moyen pour indiquer si une copie de données partagées contenues dans l'antémémoire individuelle doit être invalidée ou mise à jour si elles ont été modifiées dans une autre antémémoire individuelle du système multiprocesseurs;
et en ce que le système de commande d'antémémoire est conçu, en réponse à la réception du dit tel signal de requête sur le bus partagé et si une copie des données auxquelles une autre antémémoire doit écrire est présente dans l'antémémoire individuelle,
(I) pour transmettre, sur le bus partagé, un signal de réponse indiquant si la copie des données contenues dans l'antémémoire doit être mise à jour ou non, et
(II) si la copie des données doit être mise à jour, de mettre à jour, et de ne pas invalider, la copie des données, et par
un moyen qui, en réponse à la réception d'une réponse sur le bus partagé indiquant qu'aucune copie des données dans aucune des autres antémémoires individuelles du système multiprocesseurs ne doit être mise à jour, appose sur les données contenues dans l"antémémoire individuelle un repère indiquant qu'elles sont exclusives,
grâce à quoi la procédure d'entretien de la cohérence des données pour l'antémémoire individuelle peut être modifiée de façon dynamique en passant de l'une à l'autre des indications de mise à jour et d'invalidation d'une copie de données partagées contenues dans l'antémémoire individuelle si elle a été modifiée dans une autre antémémoire individuelle du système multiprocesseurs.

2. Système de commande d'antémémoire selon la revendication 1 comprenant un registre (8a, 8n) pour enregistrer une indication signalant si une copie de données partagées contenues dans l'antémémoire individuelle doit être invalidée ou mise à jour si elle a été modifiée dans une autre antémémoire individuelle.

3. Système de commande d'antémémoire selon la revendication 1 comprenant adapté pour fournir à un autre système identique de commande d'antémémoire compris dans le système multiprocesseurs, des données indiquant si une copie de données partagées contenues dans l'antémémoire individuelle doivent être invalidées ou mises à jour dans cette antémémoire individuelle.

4. Système de commande d'antémémoire selon l'une quelconque des revendications précédentes comprenant un moyen adapté pour diffuser les données mises à jour avec le signal de requête.

5. Système multiprocesseur comprenant une pluralité de processeurs (1a, 1n) connectés à un bus partagé (4) et à une mémoire partagée (5) par le biais d'antémémoires individuelles respectives (2a, 2n), chaque antémémoire individuelle ayant un système de commande d'antémémoire selon l'une quelconque des revendications précédentes.

6. Méthode pour commander une antémémoire individuelle (2a, 2n) pour exécuter une procédure d'entretien de la cohérence des données dans un système multiprocesseurs du type dans lequel une pluralité de processeurs (1a, 1n) sont connectés à un bus partagé (4) et à une mémoire partagée (5) par le biais d'antémémoire individuelles respectives (2a, 2n) employant chacune ces méthodes de commande similaires, la méthode comprenant les phases qui consistent à:
apposer sur les données contenues dans l'antémémoire individuelle des repères indiquant si elles sont partagées ou exclusives;
apposer sur les données contenues dans l"antémémoire individuelle un repère indiquant si elles sont non valables ou valables;
si les données de l'antémémoire individuelle auxquelles le processeur respectif doit écrire sont indiquées comme étant partagées, transmettre sur le bus partagé (4) un signal de requête (9) incluant l'adresse des données auxquelles il faut écrire et attendre une réponse (10) des autres antémémoires individuelles comprises dans le système multiprocesseurs;
en réponse à la réception d'un tel signal de requête (9) sur le bus partagé (4), déterminer si une copie des données qui doivent être adressées par une autre antémémoire individuelle est présente dans l'antémémoire individuelle et, si c'est le cas, invalider la copie des données;
caractérisée par:
la délivrance d'un indication signalant si une copie de données partagées contenues dans l'antémémoire individuelle doit être invalidée ou mise à jour si elle a été modifiée dans une autre antémémoire individuelle du système multiprocesseurs; et
en réponse à la réception du dit tel signal de requête sur le bus partagé et si une copie des données auxquelles une autre antémémoire doit écrire est présente dans l'antémémoire individuelle,
(I) la transmission, sur le bus partagé, d'un signal de réponse indiquant si la copie des données contenues dans l'antémémoire doit être mise à jour ou non, et
(II) si la copie des données doit être mise à jour, la mise à jour, et la non invalidation de la copie des données, et
en réponse à la réception d'une réponse sur le bus partagé indiquant qu'aucune copie des données dans aucune des autres antémémoires individuelles du système multiprocesseurs ne doit être mise à jour, l'apposition sur les données d'un repère indiquant qu'elles sont exclusives dans l'antémémoire individuelle,
où la procédure d'entretien de la cohérence des données pour l'antémémoire individuelle peut être modifiée de façon dynamique en passant de l'une à l'autre des indications de mise à jour et d'invalidation d'une copie de données partagées contenues dans l'antémémoire individuelle si elle a été modifiée dans une autre antémémoire individuelle du système multiprocesseurs.
